# EUROPÄISCHE PATENTSCHRIFT

(11) **EP 3 098 748 B1**
(45) Veröffentlichungstag und Bekanntmachung des Hinweises auf die Patenterteilung: **29.07.2020**
(21) Anmeldenummer: 16171022.3
(22) Anmeldetag: 24.05.2016
(51) Int. Cl.: G06F 16/23, G06F 16/11, B25J 9/16, G05B 9/02, G06F 21/64

(54) **VERFAHREN ZUR KONVERTIERUNG VON ZUMINDEST EINER ERSTEN SICHERHEITSKONFIGURATIONSDATEI**
METHOD FOR CONVERTING AT LEAST ONE FIRST SECURITY CONFIGURATION FILE
PROCEDE DE CONVERSION D'AU MOINS UN PREMIER FICHIER DE CONFIGURATION DE SECURITE

(30) Priorität: 29.05.2015 DE 102015209895
(43) Veröffentlichungstag der Anmeldung: 30.11.2016
(73) Patentinhaber: KUKA Deutschland GmbH, 86165 Augsburg (DE)
(72) Erfinder: BERTOSSI, Robert, 86316 Freidberg (DE); MILIGHETTI, Giulio, 86165 Augsburg (DE); HARTMANN, Christian, 86343 Königsbrunn (DE); FUERST, Thomas, 86156 Augsburg (DE); UEBERLE, Marc, 86316 Friedberg (DE); MELKOZEROV, Alexander, 86316 Friedberg (DE); BONIN, Uwe, 86161 Augsburg (DE)
(74) Vertreter: Mader, Joachim

(56) Entgegenhaltungen:
- DE-A1- 10 308 725
- DE-A1-102004 055 971
- US-A1- 2013 111 422
- Andreas Thome: "Entwurf und Implementierung eines laufzeitoptimierenden SPS-Compilers mit Echtzeit-Umgebung für 80x86-Systeme", 25. November 1992 (1992-11-25), Universität-GH-Paderborn, XP001503303, Seiten 1-157, * Seite 44 - Seite 45; Abbildungen 21, 25 * * Seite 55 - Seite 56 * * Seite 69 - Seite 71 * * Seite 78 - Seite 79 * * Seite 121 - Seite 122 * * Seite 125 *

## Beschreibung

### 1. Gebiet der Erfindung

Die Erfindung betrifft ein Verfahren zur Konvertierung von zumindest einer ersten Sicherheitskonfigurationsdatei in eine zweite Sicherheitskonfigurationsdatei und eine Datenverarbeitungsanlage, welche dazu eingerichtet ist das Verfahren auszuführen sowie ein maschinenlesbares Medium, welches Anweisungen enthält, die eine Datenverarbeitungsanlage dazu veranlassen das Verfahren auszuführen.

### 2. Hintergrund

Sicherheitskonfigurationsdateien bestimmen typischerweise eine Sicherheitskonfiguration einer Sicherheitssteuerungseinrichtung. Sicherheitssteuerungseinrichtungen kommen üblicherweise in sicherheitsrelevanten Maschinen und/oder Prozessen zum Einsatz, d.h. in Maschinen und/oder Prozessen, die für Menschen und/oder Umwelt eine Gefährdung darstellen können. Dabei überwacht eine Sicherheitssteuerungseinrichtung den Prozess und/oder die Maschine und greift ein, falls Grenzen überschritten werden, die durch die Sicherheitskonfiguration festgelegt sind. Beispielsweise wird durch das Eingreifen der Sicherheitssteuerungseinrichtung der Prozess und/oder die Maschine gestoppt.

Im industriellen Umfeld kommen Sicherheitssteuerungseinrichtungen beispielsweise in Manipulatorsystemen zum Einsatz. Ein Manipulatorsystem umfasst zumindest einen Manipulator, eine Steuerungseinrichtung, welche Bewegungen des Manipulators steuert und eine Sicherheitssteuerungseinrichtung, welche die Steuerungseinrichtung sowie den Manipulator überwacht. Ein Manipulator kann beispielsweise ein Industrieroboter sein. Industrieroboter sind typischerweise automatisch geführte, mit drei oder mehr frei programmierbaren Bewegungsachsen ausgerüstete Mehrzweckmanipulatoren, die entweder ortsfest oder mobil in industriellen Anwendungen eingesetzt werden.

Aus DE 10 2004 055 971 A1 sind ein Verfahren und eine Vorrichtung zur sicheren Parametrierung von sicheren elektronischen Geräten bekannt. Verfahrensgemäß werden zur Parametrierung vorgesehene Parameterwerte, welche über eine Anwenderoberfläche einer elektronischen Bedieneinrichtung ausgewählt oder eingegeben werden und anschließend an das elektronische Gerät übertragen werden, in wenigstens einem von der Bedieneinrichtung zugreifbaren Speicher gehalten und zur Verifikation der sicheren Parametrierung aus dem Speicher wenigstens einmal zurückgelesen.

Eine Sicherheitssteuerungseinrichtung eines Manipulators stellt üblicherweise mehrere Sicherheitsfunktionen bereit, wie beispielsweise die Überwachung der Einhaltung von festgelegten Achsbereichen der Bewegungsachsen, der auf den Manipulator wirkenden Kräfte und/oder Momente, der Einhaltung zulässiger Geschwindigkeiten und/oder Beschleunigungen, der Einhaltung eines räumlichen Arbeitsbereichs sowie möglicher Kollisionen mit weiteren Manipulatoren oder in der Umgebung befindlicher Menschen und/oder Gegenstände. Weitere Sicherheitsfunktionen oder eine Kombination von Sicherheitsfunktionen sind ebenfalls möglich.

Eine Sicherheitskonfigurationsdatei bestimmt nun, welche Sicherheitsfunktionen von der Sicherheitssteuerungseinrichtung konkret überwacht werden sollen (Sicherheitskonfiguration) und gibt mittels Sicherheitsparametern vor, welche Grenzen einzuhalten sind. Sicherheitsparameter können beispielweise Drehwinkelbereiche sein, die an einer Achse vorgeben sind, wie etwa 10 bis 45°, oder maximal zulässige Drehmomentwerte, die an einer Achse zulässig sind, wie etwa maximal 50 Nm.

Bei einer Änderung an der Sicherheitssteuerungseinrichtung, wie beispielsweise einer Aktualisierung der Sicherheitssteuerungssoftware, ändert sich häufig auch das Format der Sicherheitskonfiguration, weil beispielsweise neue Sicherheitsfunktionen bereitgestellt werden oder bestehende Sicherheitsfunktionen zusätzliche oder andere Sicherheitsparameter benötigen. Ebenso kann sich beispielsweise die Einheit der Sicherheitsparameter ändern. So ist in dem genannten Beispiel der Überwachung von Achsbereichen eine Änderung der Einheit des Drehwinkels von Grad nach Milligrad vorstellbar.

Unterstützt die geänderte Sicherheitssteuerungseinrichtung das alte Format der Sicherheitskonfiguration nicht mehr, muss die zumindest eine Sicherheitskonfigurationsdatei konvertiert werden. Diese Konvertierung der Sicherheitskonfigurationsdatei ist auch dann notwendig, wenn die bisherigen Sicherheitsfunktionen und Sicherheitsparameter nach der Änderung der Sicherheitssteuerungseinrichtung unverändert übernommen werden sollen. Typischerweise erfolgt diese Konvertierung mittels manueller Editierung der Sicherheitskonfigurationsdatei durch einen Programmierer.

Um die Sicherheitskonfigurationsdatei eindeutig identifizieren zu können, weist diese typischerweise eine Kennung auf, die aus der Prüfsumme der Binärdatei gebildet wird. Da die konvertierte, zweite Sicherheitskonfigurationsdatei allerdings nicht mehr identisch zur bisherigen, ersten Sicherheitskonfigurationsdatei ist, ergibt sich eine andere Prüfsumme der Binärdatei, d.h. eine andere Kennung.

Die Sicherheitssteuerungseinrichtung erkennt die Änderung der Sicherheitskonfigurationsdatei anhand der Änderung der Kennung und fordert eine Verifikation und Aktivierung der zweiten Sicherheitskonfigurationsdatei durch beispielsweise einen autorisierten Sicherheitsinbetriebnehmer an, wodurch ein beträchtlicher Aufwand entsteht. Bei der Verifikation muss der Sicherheitsinbetriebnehmer typischerweise anhand von physischen Tests prüfen, ob die konvertierte Sicherheitskonfigurationsdatei korrekt von der Sicherheitssteuerungseinrichtung übernommen wurde und die erwartete Wirkung erzielt. Die Verifikation muss zudem für Nachweiszwecke dokumentiert werden.

Es ist daher die Aufgabe der vorliegenden Erfindung den Konvertierungs- und Verifikationsaufwand beim Konvertieren einer ersten Sicherheitskonfigurationsdatei zu reduzieren sowie weitere beschriebene Nachteile auszuräumen. Diese Aufgabe wird mit einem Verfahren gemäß Anspruch 1, einer Datenverarbeitungsanlage gemäß Anspruch 13 und einem maschinenlesbaren Medium gemäß Anspruch 14 gelöst.

### 3. Ausführliche Beschreibung der Erfindung

Insbesondere wird die Aufgabe gelöst durch ein Verfahren zur Konvertierung von zumindest einer ersten Sicherheitskonfigurationsdatei einer Sicherheitssteuerungseinrichtung in eine zweite Sicherheitskonfigurationsdatei, wobei die Sicherheitssteuerungseinrichtung vorzugsweise eine Manipulatorsicherheitssteuerungseinrichtung ist, und wobei das Verfahren die folgenden Verfahrensschritte umfasst:
a) Konvertieren der ersten Sicherheitskonfigurationsdatei in eine zweite Sicherheitskonfigurationsdatei mittels eines Konverters, und
b) Überprüfen der Konsistenz der ersten Sicherheitskonfigurationsdatei und der zweiten Sicherheitskonfigurationsdatei mittels einer Konsistenzprüfungseinheit.

Die Sicherheitssteuerungseinrichtung ist bevorzugt dazu eingerichtet ein anderes System, wie beispielsweise einen Manipulator und/oder eine Steuerungseinrichtung zu überwachen. Vorzugsweise kann die Sicherheitssteuerungseinrichtung in das zu überwachende System eingreifen und beispielsweise einen Stopp des Systems erzwingen. Ebenso kann die Sicherheitssteuerungseinrichtung dazu eingerichtet sein, ein Modell des anderen Systems zu überwachen.

Durch die Konvertierung der ersten Sicherheitskonfigurationsdatei in eine zweite Sicherheitskonfigurationsdatei mittels eines Konverters ist eine manuelle Editierung durch einen Programmierer nicht erforderlich. Das Überprüfen der Konsistenz der ersten Sicherheitskonfigurationsdatei und der zweiten Sicherheitskonfigurationsdatei mittels einer Konsistenzprüfungseinheit erlaubt überdies, im Falle einer festgestellten Konsistenz der überprüften Sicherheitskonfigurationsdateien, die zur Verifikation der zweiten Sicherheitskonfigurationsdatei notwendigen Tests zu unterlassen.

Die erste Sicherheitskonfigurationsdatei weist zumindest eine erste Kennung und erste Konfigurationsdaten auf und das Konvertieren der ersten Sicherheitskonfigurationsdatei umfasst zumindest das Konvertieren der Konfigurationsdaten, wobei die Konfigurationsdaten Sicherheitsparameter und/oder Sicherheitsfunktionsauswahlparameter umfassen. Sicherheitsfunktionsauswahlparameter geben beispielweise an, *was* überwacht werden soll, wie etwa der Drehwinkel der Achse 1, oder das an Achse 2 anliegende Drehmoment eines Manipulators (etwa eines mehrachsigen Gelenkarmroboters). Die Sicherheitsparameter bezeichnen bzw. definieren die zugehörigen Grenzwerte. Beispielsweise soll der Drehwinkel der Achse 1 in einem bestimmten Bereich von 10 bis 40° liegen, und das an Achse 2 anliegende Drehmoment einen bestimmten Wert, wie z.B. 50 Nm, nicht überschreiten. Eine Änderung der Sicherheitskonfiguration kann Änderungen an sowohl den Sicherheitsfunktionsauswahlparametern als auch der zugehörigen Sicherheitsparameter umfassen. Es ist etwa denkbar, dass bei einer Änderung die Überwachung des Drehwinkels der Achse 1 nicht länger notwendig ist, so dass dieser Sicherheitsfunktionsauswahlparameter nicht länger benötigt wird.

Das Bereitstellen einer Kennung, welche der Sicherheitskonfigurationsdatei zugeordnet ist, ist vorteilhaft, da so die Aktivierung einer ungeeigneten Sicherheitskonfigurationsdatei vermieden werden kann. Dies verhindert den Betrieb des Systems mit einer ungeeigneten Sicherheitskonfiguration. Beispielsweise ist in einem Manipulatorsystem, welches einen Manipulator, eine Steuerungseinrichtung und eine Sicherheitssteuerungseinrichtung umfasst, die Kennung der aktuell gültigen Sicherheitskonfigurationsdatei, d.h. der aktivierten Sicherheitskonfigurationsdatei, hinterlegt. Bevor das Manipulatorsystem in Betrieb genommen werden kann, wird überprüft, ob die hinterlegte Kennung mit der Kennung der im System gespeicherten Sicherheitskonfigurationsdatei übereinstimmt. Stimmen die Kennungen überein, so kann das Manipulatorsystem gestartet und der Manipulator bewegt werden.

Andernfalls ist eine Aktivierung der im System gespeicherten Sicherheitskonfigurationsdatei durch einen Bediener notwendig. Stimmt der Bediener der Aktivierung zu, so wird die Kennung der durch den Bediener aktivierten Sicherheitskonfigurationsdatei im System hinterlegt und das System mit der nun aktivierten Sicherheitskonfigurationsdatei in Betrieb genommen. Stimmt der Bediener der Aktivierung nicht zu, so ist die Sicherheitskonfigurationsdatei ungeeignet und das System kann nicht in Betrieb genommen werden, wodurch vorzugsweise eine Bewegung des Manipulators unterbunden wird.

Eine Aufteilung der Konfigurationsdaten in Sicherheitsparameter und Sicherheitsfunktionsauswahlparameter ist vorteilhaft, da die Konvertierung zweistufig erfolgen kann. Sind beispielsweise Sicherheitsfunktionen in einer geänderten Sicherheitssteuerungseinrichtung nicht mehr vorhanden, so müssen die dazugehörigen Sicherheitsparameter nicht konvertiert werden, wodurch die Konvertierung beschleunigt werden kann.

Die Kennung der ersten Sicherheitskonfigurationsdatei wird nicht konvertiert, sodass die zweite Sicherheitskonfigurationsdatei die gleiche Kennung wie die ersten Sicherheitskonfigurationsdatei aufweist.

Die Verwendung der gleichen Kennung für die erste Sicherheitskonfigurationsdatei und die konvertierte zweite Sicherheitskonfigurationsdatei ist vorteilhaft, da die zweite Sicherheitskonfigurationsdatei nicht durch einen Bediener aktiviert werden muss. Dies gilt, da die Kennung der aktuell gültigen Sicherheitskonfigurationsdatei (der ersten Sicherheitskonfigurationsdatei) im überwachten System hinterlegt ist. Da die zweite Sicherheitskonfigurationsdatei die gleiche Kennung aufweist, kann die zweite Sicherheitskonfigurationsdatei ohne vorherige Aktivierung und Verifikation verwendet werden.

Bevorzugt ist die Kennung der ersten Sicherheitskonfigurationsdatei eine unabhängige Kennung. Eine unabhängige Kennung ist eine Kennung, welche nicht unmittelbar aus der Sicherheitskonfigurationsdatei selbst hervorgeht. Eine abhängige Kennung wäre beispielsweise die Prüfsumme der Binärdatei der Sicherheitskonfigurationsdatei. Die Verwendung einer unabhängigen Kennung ist vorteilhaft, da so die Kennung, welche für die erste Sicherheitskonfigurationsdatei verwendet wird ohne diese zu konvertieren direkt auf die zweite Sicherheitskonfigurationsdatei übertragen werden kann. Dies ermöglicht, wie oben beschrieben, eine Verwendung der zweiten Sicherheitskonfigurationsdatei ohne vorherige Aktivierung und Verifikation.

Bevorzugt wird beim Überprüfen der Konsistenz der ersten und zweiten Sicherheitskonfigurationsdateien überprüft, ob die Sicherheitsfunktionsauswahlparameter, welche in der ersten Sicherheitskonfigurationsdatei implementiert sind, auch in der zweiten Sicherheitskonfigurationsdatei implementiert sind.

Die Überprüfung, ob die gleichen Sicherheitsfunktionsauswahlparameter sowohl in der ersten als auch in der zweiten Sicherheit Konfigurationsdatei implementiert sind, ermöglicht eine schnelle Feststellung von möglichen Inkonsistenzen. Stehen beispielsweise Sicherheitsfunktionen in einer geänderten Version der Sicherheitssteuerungseinrichtung nicht mehr zur Verfügung, kann dies bereits vor der Überprüfung der Konsistenz der Sicherheitsparameter festgestellt werden.

Beim Überprüfen der Konsistenz der ersten und zweiten Sicherheitskonfigurationsdateien wird überprüft, ob die Sicherheitsparameter, welche in der ersten Sicherheitskonfigurationsdatei implementiert sind, den Sicherheitsparametern, welche in der zweiten Sicherheitskonfigurationsdatei implementiert sind, entsprechen.

Entsprechen sich die Sicherheitsparameter der ersten Sicherheitskonfigurationsdatei und der zweiten Sicherheitskonfigurationsdatei, so entfalten die Sicherheitskonfigurationsdateien in Kombination mit ihrer zugehörigen Sicherheitssteuerungseinrichtung die gleiche Wirkung. Legen die Sicherheitsparameter beispielsweise maximal zulässige Drehwinkel fest, so müssen sich die, durch die Sicherheitsparameter festgelegten Drehwinkel in ihrer physikalischen Bedeutung entsprechen. Durch die Überprüfung der Sicherheitsparameter kann festgestellt werden, ob diese korrekt konvertiert worden sind.

Werden Sicherheitsparameter und Sicherheitsfunktionsauswahlparameter getrennt voneinander auf Konsistenz überprüft, können Fehler, die bei der Konvertierung aufgetreten sind, schnell erkannt werden und dem entsprechenden Parameter zugeordnet werden. Dies ermöglicht im Falle auftretender Inkonsistenzen eine effiziente nachträgliche manuelle Editierung der zweiten Sicherheitskonfigurationsdatei.

Bevorzugt wird die Kennung der zweiten Sicherheitskonfigurationsdatei geändert und/oder eine Fehlermeldung ausgegeben, wenn beim Überprüfen der Konsistenz eine Inkonsistenz festgestellt wird. Die Änderung der Kennung der zweiten Sicherheitskonfigurationsdatei verhindert die Verwendung der zweiten Sicherheitskonfigurationsdatei ohne vorherige Verifikation und Aktivierung durch einen Bediener, wenn Inkonsistenzen aufgetreten sind, da die Kennung nicht der im System hinterlegten Kennung entspricht. Das Ausgeben einer Fehlermeldung ist vorteilhaft, da ein Bediener eine inkonsistente Konvertierung unmittelbar erkennt. Im Falle einer inkonsistenten Konvertierung wird bevorzugt die erste Sicherheitskonfigurationsdatei beibehalten, d.h. die zweite Sicherheitskonfigurationsdatei wird nicht aktiviert. Inkonsistenzen können beispielweise aufgrund von Programmierfehlern im Konverter oder aufgrund von Datenübertragungsfehlern auftreten. Ob tatsächlich eine Inkonsistenz vorliegt, kann vorzugsweise auf Basis von Regelsätzen bestimmt werden. Die Regelsätze definieren erlaubte Abweichungen in den Sicherheitsparametern. Wird beispielsweise in einer neuen Sicherheitssteuerungssoftware der Sicherheitssteuerung die Genauigkeit eines Sicherheitsparameters geändert, können solche Abweichungen auftreten, die nicht zwangsweise zu einer Inkonsistenz führen. Folglich müssen sich die erste und zweite Sicherheitskonfigurationsdatei bzw. deren Sicherheitsparameter und/oder deren Sicherheitsfunktionsauswahlparameter nicht vollständig entsprechen, um eine Konsistenz zu erzielen.

Bevorzugt umfasst das Verfahren weiterhin den folgenden Verfahrensschritt:
c) Erstellen einer ersten Delta-Liste mittels des Konverters, falls ein vollständiges Konvertieren der ersten Sicherheitskonfigurationsdatei in eine zweite Sicherheitskonfigurationsdatei nicht möglich ist, wobei die erste Delta-Liste Abweichungen der ersten Sicherheitskonfigurationsdatei von der zweiten Sicherheitskonfigurationsdatei angibt.

Die Abweichungen der ersten Sicherheitskonfigurationsdatei von der zweiten Sicherheitskonfigurationsdatei können sowohl Abweichungen in Sicherheitsparametern als auch in Sicherheitsfunktionsauswahlparametern umfassen. Bevorzugt gibt die erste Delta-Liste an, ob Sicherheitsfunktionen, welche durch die Sicherheitsfunktionsauswahlparameter ausgewählt werden, in der geänderten Sicherheitssteuerungseinrichtung verfügbar sind, und somit, ob die Sicherheitskonfigurationsdateien überhaupt vollständig konvertierbar sind. Somit gibt die erste Delta-Liste Inkonsistenzen an, die auf inkompatible Änderungen der Sicherheitssteuerungseinrichtung beruhen. Um beim obigen Beispiel betreffend die Drehwinkelüberwachung von Achse 1 eines Manipulators und des Drehmoments der Achse 2 zu bleiben, soll etwa die Überwachung des Drehwinkels der Achse 1 nicht länger notwendig sein, so dass dieser Sicherheitsfunktionsauswahlparameter nicht länger benötigt wird. In diesem Fall kann der Konverter auch nicht diesen Sicherheitsfunktionsauswahlparameter und die zugehörigen Sicherheitsparameter konvertieren.

Weiterhin kann die Nichtverfügbarkeit eines Sicherheitsfunktionsauswahlparameters nach einer Änderung der Sicherheitssteuerungseinrichtung in einer Aktualisierung der Sicherheitssteuerungssoftware (Upgrade) oder in der erneuten Verwendung einer älteren Version der Sicherheitssteuerungssoftware (Downgrade) begründet sein. Weiterhin kann die Nichtverfügbarkeit im Verzicht eines Anwenders auf Optionspakete der Sicherheitssteuerungssoftware begründet sein (Kosteneinsparung) oder im Ersatz einer Sicherheitsfunktion durch eine inkompatible neue Sicherheitsfunktion.

Beispielsweise wird eine kartesische Geschwindigkeitsüberwachung des Tool Center Points (TCP) eines Manipulators durch eine kartesische Geschwindigkeitsüberwachung ersetzt, welche Geschwindigkeitsüberwachung neben der TCP-Geschwindigkeit zusätzlich die Geschwindigkeit des gesamten Manipulators überwacht. Würde nun der Konverter die alte, erste Sicherheitskonfigurationsdatei umfassend die Geschwindigkeitsüberwachung des TCP automatisch durch die neue Geschwindigkeitsüberwachung von TCP und Manipulator ersetzen, müssten weitere Sicherheitsparameter für die Geschwindigkeitsüberwachung des Manipulators bereitgestellt werden. Die Delta-Liste würde in diesem Beispiel einen Sicherheitsinbetriebnehmer über diese Inkonsistenz informieren. Anschließend könnte der Sicherheitsinbetriebnehmer die neue, zusätzliche Geschwindigkeitsüberwachung des gesamten Manipulators prüfen.

Die Erstellung der Delta-Liste mittels des Konverters ist vorteilhaft, da so bereits bei der Konvertierung festgestellt werden kann, ob Inkonsistenzen aufgrund von inkompatiblen Änderungen auftreten. Ein Bediener kann in dem geschilderten Beispielfall so schnell und einfach erkennen, dass die Inkonsistenz unproblematisch ist, da die Inkonsistenz auf keinem Fehler basiert, sondern auf einer absichtlichen Änderung der Sicherheitsfunktionen beruht. Ist dies die einzige Inkonsistenz, kann der Bediener die zweite Sicherheitskonfigurationsdatei freigeben.

Bevorzugt wird einem Bediener die erste Delta-Liste ausgegeben. Die Ausgabe der Delta-Liste erfolgt bevorzugt auf einem grafischen User Interface (GUI). Andere Ausgabeformen, wie beispielsweise das Ausdrucken der Delta-Liste sind ebenfalls möglich. Die Ausgabe der Delta-Liste ermöglicht es dem Bediener die zweite Sicherheitskonfigurationsdatei nachträglich effizient manuell zu editieren. Beispielsweise können Sicherheitsfunktionen, welche in der geänderten Sicherheitssteuerungseinheit nicht mehr oder abgeändert zur Verfügung stehen, manuell durch eine äquivalente Auswahl von Sicherheitsfunktionen oder eine Kombination von Sicherheitsfunktionen ersetzt werden.

Der Teil der Sicherheitskonfigurationsdatei, welcher nicht von der Delta-Liste des Konverters erfasst ist, kann der Konsistenzprüfungseinheit zur Überprüfung der (Teil-)Konsistenz übermittelt werden. Somit können zumindest Teile der Sicherheitskonfigurationsdatei ohne eine vorherige Verifikation aktiviert werden.

Bevorzugt umfasst das Verfahren zumindest die folgenden weiteren Verfahrensschritte:
d) Erstellen einer zweiten Delta-Liste mittels der Konsistenzprüfungseinheit, wobei die zweite Delta-Liste Abweichungen der ersten Sicherheitskonfigurationsdatei von der zweiten Sicherheitskonfigurationsdatei angibt, und
e) Ausgeben der Delta-Listen.

Die Erstellung einer zweiten Delta-Liste mittels der Konsistenzprüfungseinheit ist vorteilhaft, da auch Inkonsistenzen, welche durch den Konverter verursacht wurden (und nicht durch eine absichtliche Änderung) festgestellt werden können. Stimmen die vom Konverter und der Konsistenzprüfungseinheit erstellten Delta-Listen nicht überein, so ist neben einer durch inkompatible Änderungen begründete Inkonsistenz (wie oben beschrieben etwa durch das Wegfallen der Drehwinkelüberwachung) eine weitere Inkonsistenz aufgetreten. Diese kann, um im obigen Beispiel zu bleiben, darin liegen, dass die Sicherheitsparameter des Drehmoments der Achse 2 falsch konvertiert wurden, und in der zweiten Sicherheitskonfigurationsdatei fälschlich ein maximal zulässiges Drehmoment von 500 Nm eingetragen ist. In diesem Fall muss die zweite Sicherheitskonfigurationsdatei manuell vom Bediener verifiziert werden.. Werden die Delta-Listen ausgegeben, so kann ein Bediener prüfen, ob eine mögliche Inkonsistenz durch fehlerhafte Konvertierung oder bei der Ausgabe bzw. der Darstellung der Delta-Listen begründet liegt. Stimmen die vom Konverter und der Konsistenzprüfungseinheit erstellten Delta-Listen überein, so ist der konvertierte Teil der Sicherheitskonfigurationsdatei auch konsistent. Dieser Teil kann folglich ohne vorhergehende Verifizierung aktiviert werden.

Bevorzugt umfasst das Verfahren zumindest den folgenden weiteren Verfahrensschritt:
f) Aktivieren der zweiten Sicherheitskonfigurationsdatei, falls die Kennung der zweiten Sicherheitskonfigurationsdatei mit einer Kennung, welche in einer Sicherheitssteuerungseinrichtung gespeichert ist übereinstimmt.

Vorzugsweise erfolgt das Aktivieren der zweiten Sicherheitskonfigurationsdatei indem die zweite Sicherheitskonfigurationsdatei bereits als "default" Wert aktiviert ist, und deaktiviert wird, falls die Kennung der zweiten Sicherheitskonfigurationsdatei mit der Kennung, welche in einer Sicherheitssteuerungseinrichtung gespeichert ist, nicht übereinstimmt. Die Voraussetzung, dass die Kennung der zweiten Sicherheitskonfigurationsdatei mit einer Kennung, welche in einer Sicherheitssteuerungseinrichtung gespeichert ist, übereinstimmen muss, um die zweite Sicherheitskonfigurationsdatei zu aktivieren, verhindert das inkonsistent konvertierte Sicherheitskonfigurationsdateien aktiviert werden. Wie bereits beschrieben, kann die zweite Sicherheitskonfigurationsdatei vorzugsweise automatisch, d.h. ohne eine Aktivierung und Verifikation durch einen Bediener aktiviert werden, wenn sie die gleiche Kennung wie die erste Sicherheitskonfigurationsdatei aufweist.

Bevorzugt kann die Konvertierung und/oder die Überprüfung der Konsistenz "offline" geschehen. Der Begriff "offline" bedeutet in diesem Zusammenhang, dass die Konvertierung und/oder Überprüfung der Konsistenz der Sicherheitskonfigurationsdateien auch ohne Anbindung an eine Steuerungseinrichtung eines Manipulators oder an eine Sicherheitssteuerungseinrichtung geschehen kann. Vorzugsweise kann die Konvertierung und Überprüfung der Konsistenz in einer separaten Datenverarbeitungsanlage ausgeführt werden. Somit ist die Konvertierung und Überprüfung der Konsistenz räumlich und zeitlich von der Aktivierung und/oder der Überprüfung der Aktivierung in der Sicherheitssteuerungseinrichtung getrennt und kann unabhängig ausgeführt werden.

Bevorzugt umfasst das Verfahren weiterhin die folgenden Schritte:
g) Editieren einer ersten Sicherheitskonfigurationsdatei in eine zweite Sicherheitskonfigurationsdatei mittels eines Editors;
h) Erstellen einer dritten Delta-Liste mittels des Editors, wobei die dritte Delta-Liste Abweichungen der ersten Sicherheitskonfigurationsdatei von der zweiten Sicherheitskonfigurationsdatei angibt;
i) Überprüfen der Konsistenz der ersten Sicherheitskonfigurationsdatei und der zweiten Sicherheitskonfigurationsdatei mittels einer Konsistenzprüfungseinheit;
j) Ausgeben der zweiten und dritten Delta-Listen.

Das manuelle Editieren der ersten Sicherheitskonfigurationsdatei in eine zweite Sicherheitskonfigurationsdatei und das anschließende Erstellen einer dritten Delta Liste ermöglicht ein manuelles Eingreifen in die Sicherheitskonfigurationsdatei, ohne einen hohen Verifikationsaufwand zu generieren. Entsprechen die von der Konsistenzprüfungseinheit ermittelten Abweichungen der ersten Sicherheitskonfigurationsdatei von der zweite Sicherheitskonfigurationsdatei (zweite Delta-Liste) der dritten Delta-Liste, so müssen lediglich die Abweichungen der zweiten und dritten Delta-Listen manuell verifiziert werden. Der Teil, der zweiten Sicherheitskonfigurationsdatei, welche keinen Änderungen unterworfen ist kann ohne vorhergehende Verifikation aktiviert werden.

Die Aufgaben werden weiter gelöst durch eine Datenverarbeitungsanlage, welche zur Durchführung des oben beschriebenen Verfahrens eingerichtet ist.

Eine Datenverarbeitungsanlage ist vorzugsweise ein Computersystem, welches die Konvertierung und Überprüfung der Konsistenz durchführen kann, wenn der Konverter und die Konsistenzprüfungseinheit zur Verfügung stehen. Besonders bevorzugt ist die Datenverarbeitungsanlage ein Bediengerät einer Manipulatorsteuerungseinrichtung oder auch die Manipulatorsteuerungseinrichtung selbst. Somit kann das Verfahren auf im Manipulatorsystem vorhandenen Komponenten ausgeführt werden. Dabei sind der Konverter und die Konsistenzprüfungseinheit vorzugsweise auf der Datenverarbeitungsanlage eingerichtet. Besonders bevorzugt sind Konverter und die Konsistenzprüfungseinheit zwei voneinander unabhängige Softwaremodule.

Die Aufgaben werden weiter gelöst durch ein maschinenlesbares Medium, welches Anweisungen enthält, die eine Datenverarbeitungsanlage dazu veranlassen, das beschriebene Verfahren auszuführen. Vorzugsweise ist das maschinenlesbares Medium ein tragbares maschinenlesbares Medium, wie beispielsweise eine CD, ein USB Stick oder sonstige tragbare Speichereinheiten. Dies ist vorteilhaft, da so Anweisungen zur Ausführung des Verfahrens einfach auf unterschiedlichen Datenverarbeitungsanlagen ausgeführt werden können.

### 4. Beschreibung bevorzugter Ausführungsformen

Im Folgenden wird die Erfindung unter Bezugnahme auf die beigefügten Figuren genauer erläutert. Hierbei zeigt:
- Fig. 1: ein Verfahren zur Konvertierung einer ersten Sicherheitskonfigurationsdatei;
- Fig. 2: ein erweitertes Verfahren zur Konvertierung einer ersten Sicherheitskonfigurationsdatei, und
- Fig. 3: ein Verfahren zur Aktivierung einer zweiten Sicherheitskonfigurationsdatei.

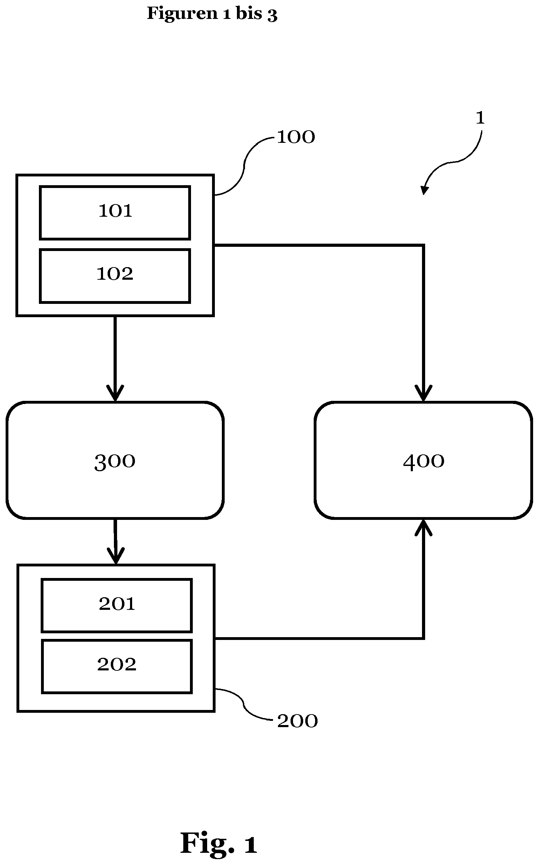

Fig. 1 zeigt schematisch ein bevorzugtes Verfahren 1 zur Konvertierung einer ersten Sicherheitskonfigurationsdatei 100 mittels eines Konverters 300 in eine zweite Sicherheitskonfigurationsdatei 200. Die erste Sicherheitskonfigurationsdatei 100 umfasst eine Kennung 101 sowie Konfigurationsdaten 102, welche vorzugsweise Sicherheitsparameter und Sicherheitsfunktionsauswahlparameter umfassen.

Die Konvertierung der ersten Sicherheitskonfigurationsdatei 100 wird beispielsweise aufgrund einer Änderung der, der Sicherheitskonfigurationsdatei zugeordneten Sicherheitsteuerungseinrichtung nötig. Beispielsweise kann sich die Sicherheitssteuerungssoftware ändern, und sich so Einheiten, Variablennamen oder die Genauigkeit, mit welcher die Sicherheitsparameter erfasst werden ändern. Somit ist eine Konvertierung der Sicherheitskonfigurationsdatei 100 nötig.

Weiterhin kann eine Änderung der Sicherheitsteuerungseinrichtung das Bereitstellen von neuen Sicherheitsfunktionen oder die Bereitstellung zusätzlicher Sicherheitsparameter für vorhandene Sicherheitsfunktionen umfassen. Typische Beispiele für zusätzliche Sicherheitsparameter sind beispielsweise, die Änderung einer kartesischen Arbeitsraumüberwachung aller Achsen eines Manipulators und eines Werkzeug innerhalb eines konfigurierten Arbeitsraums, in eine separate Überwachung der Achsen des Manipulators und/oder des Werkzeugs. Im Falle einer konsistenten Konvertierung müssten daher die Sicherheitsparameter für den Manipulator und das Werkzeug separat bereitgestellt werden. Würde die Änderung wieder rückgängig gemacht und würde beispielsweise nur das Werkzeug überwacht werden, so wäre eine konsistente Konvertierung nicht möglich.

Die konvertierte, zweite Sicherheitskonfigurationsdatei 200 umfasst eine Kennung 201 und konvertierte Konfigurationsdaten 202. Die Kennung 101 der ersten Sicherheitskonfigurationsdatei 100 ist mit der Kennung 201 der zweiten Sicherheitskonfigurationsdatei 200 identisch. Die Kennung 201 soll nur dann von der Kennung 101 abweichen, wenn die erste Sicherheitskonfigurationsdatei 100 nicht konsistent in die zweite Sicherheitskonfigurationsdatei 200 konvertiert wurde.

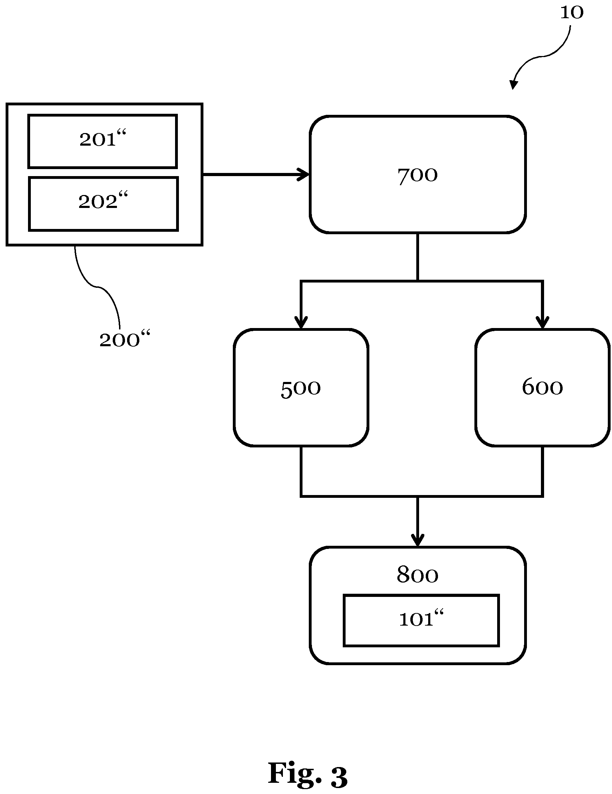

Ob die erste Sicherheitskonfigurationsdatei 100 und die zweite Sicherheitskonfigurationsdatei 200 konsistent konvertiert wurden, wird mittels der Konsistenzprüfungseinheit 400 ermittelt. Wird hierbei die Konsistenz der beiden Sicherheitskonfigurationsdateien 100, 200 festgestellt, so kann die zweite Sicherheitskonfigurationsdatei 200 ohne vorherige Verifikation durch einen Bediener aktiviert und das System in Betrieb genommen werden. Eine beispielhafte Aktivierung einer Sicherheitskonfigurationsdatei ist in Figur 3 gezeigt.

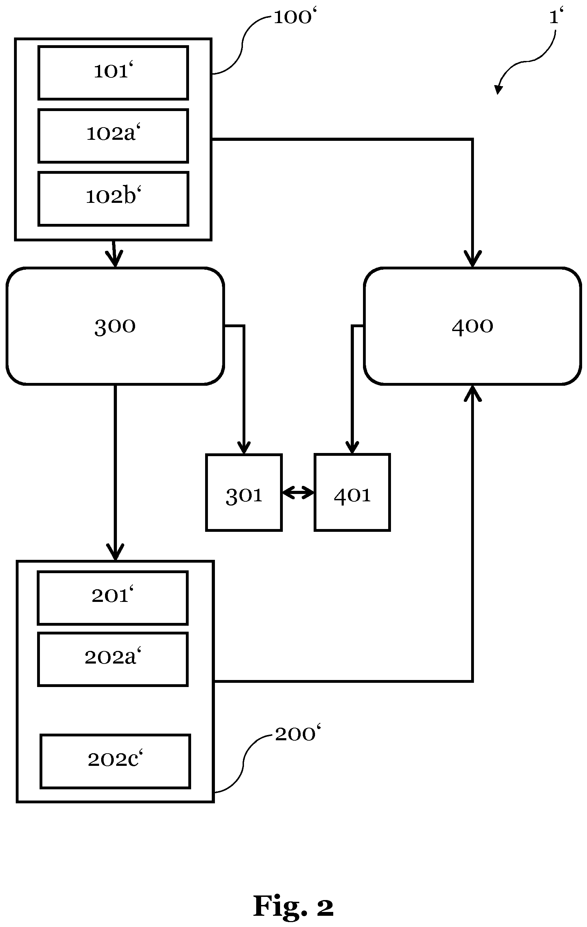

Fig. 2 zeigt schematisch ein bevorzugtes erweitertes Verfahren 1' zur Konvertierung einer ersten Sicherheitskonfigurationsdatei 100' in eine zweite Sicherheitskonfigurationsdatei 200' mittels des Konverters 300 aus Figur 1. Die erste Sicherheitskonfigurationsdatei 100' umfasst eine Kennung 101' sowie Konfigurationsdaten 102a', 102b'. Die zweite Sicherheitskonfigurationsdatei 200' umfasst eine Kennung 201' sowie Konfigurationsdaten 202a', 202c'. Die Konfigurationsdaten 102a' sind beispielsweise einer ersten Sicherheitsfunktion, wie beispielsweise der Drehmomentüberwachung der Achse 2 eines Manipulators zugeordnet. Diese Konfigurationsdaten 102a' können mittels des Konverters 300 in entsprechende Konfigurationsdaten 202a' der zweiten Sicherheitskonfigurationsdatei 200' konvertiert werden.

Die Konfigurationsdaten 102b' sind beispielsweise einer weiteren Sicherheitsfunktion, wie beispielsweise die Drehwinkelüberwachung der Achse 1 des Manipulators zugeordnet. Diese Sicherheitsfunktion soll in diesem Beispiel in der geänderten Sicherheitssteuerungseinrichtung nicht mehr zur Verfügung stehen (d.h. sie ist nicht länger verfügbar). Daher können die Konfigurationsdaten 102b' nicht konvertiert werden. Es liegt eine inkompatible Änderung der Sicherheitssteuerungseinrichtung vor, welche gegebenenfalls durch manuelle Editierung der zweiten Sicherheitssteuerungseinrichtung 200' behoben werden kann. Tritt eine solche inkompatible Änderung auf, so erstellt der Konverter 300 vorzugsweise eine erste Delta-Liste 301, welche Abweichungen der ersten Sicherheitskonfigurationsdatei 100' von der zweiten Sicherheitskonfigurationsdatei 200' angibt. Im vorliegenden Beispiel beträfe dies die Konfigurationsdaten 102b'.

Bei der Überprüfung der Konsistenz der ersten Sicherheitskonfigurationsdatei 100' und der zweiten Sicherheitskonfigurationsdatei 200' mittels der Konsistenzprüfungseinheit 400 kann die Konsistenz der Teile der Sicherheitskonfigurationsdateien 100', 200', welche nicht von einer inkompatiblen Änderung betroffen sind überprüft werden. Vorzugsweise gibt die Konsistenzprüfungseinheit 400 eine zweite Delta-Liste 401 aus, welche vorzugsweise mit der ersten Delta-Liste 301 verglichen wird. Stimmen die Delta-Listen 301, 401 überein, so sind die übereinstimmenden Teile 102a', 202a' der Sicherheitskonfigurationsdateien 100', 200' konsistent.

Die Konfigurationsdaten 202c' der zweiten Sicherheitssteuerungseinrichtung 200'sind beispielsweise einer dritten Sicherheitsfunktion zugeordnet, welche erst in der der geänderten Sicherheitssteuerungseinrichtung zur Verfügung stehen soll. Beispielsweise können diese Konfigurationsdaten die Drehwinkelüberwachung der Achse 3 betreffen. Diese Konfigurationsdaten 202c' können nicht vom Konverter 300 erzeugt werden, da sie in der ersten Sicherheitskonfigurationsdatei 100' kein Äquivalent haben. Daher müssen diese Konfigurationsdaten 202c' nachträglich in die Sicherheitskonfigurationsdatei 200' editiert worden sein. Für die Konvertierung der ersten Sicherheitskonfigurationsdatei 100' in die zweite Sicherheitskonfigurationsdatei 200' sind die Konfigurationsdaten 202c' folglich unbeachtlich.

Fig. 3 zeigt schematisch ein bevorzugtes Verfahren zur Aktivierung einer zweiten Sicherheitskonfigurationsdatei 200". Die Sicherheitskonfigurationsdatei 200" umfasst eine Kennung 201" und Konfigurationsdaten 202". Zur Aktivierung wird die Sicherheitskonfigurationsdatei 200" in eine Datenverarbeitungsanlage 700 eines Manipulatorsystems 10 bereitgestellt. Das Manipulatorsystem 10 umfasst einen Manipulator 500, eine Steuerungseinrichtung 600 sowie eine Sicherheitsteuerungseinrichtung 800. Die Kennung 101" der aktuell gültigen Sicherheitskonfigurationsdatei, d.h. der aktivierten Sicherheitskonfigurationsdatei, ist in der Sicherheitsteuerungseinrichtung 800 hinterlegt bzw. gespeichert. Bevor das Manipulatorsystem in Betrieb genommen werden kann, wird überprüft, ob die hinterlegte Kennung 101" mit der Kennung 201" der, in der Datenverarbeitungsanlage 700 bereitgestellten Sicherheitskonfigurationsdatei 200" übereinstimmt. Stimmen die Kennungen 101", 201" überein, so kann das Manipulatorsystem 10 gestartet und der Manipulator 500 mittels der Steuerungseinrichtung 600 bewegt werden. Andernfalls ist eine Aktivierung der im System gespeicherten Sicherheitskonfigurationsdatei 200" ohne vorherige Verifikation durch einen Bediener nicht möglich. Das System kann folglich erst nach erfolgreicher Aktivierung der im System gespeicherten Sicherheitskonfigurationsdatei 200" in Betrieb genommen werden.

Besonders bevorzugt wird die Kennung 201" der zu aktivierenden Sicherheitskonfigurationsdatei 200" auch in einem Speicher des Manipulators 500 und/oder in einem Speicher der Steuerungseinrichtung 600 hinterlegt. Bevor das Manipulatorsystem 10 gestartet werden kann wird dann überprüft, ob die in der Sicherheitssteuerungseinrichtung 800 hinterlegte Kennung 101" mit den Kennungen, welche in einem Speicher des Manipulators 500 und/oder in einem Speicher der Steuerungseinrichtung 600 hinterlegt sind, übereinstimmen. Dadurch kann sicher die Aktivierung einer ungeeigneten Sicherheitskonfigurationsdatei vermieden werden.

### Bezugszeichenliste:

- 1, 1':: Verfahren zur Konvertierung
- 10:: Manipulatorsystem
- 100; 100'; 100":: Erste Sicherheitskonfigurationsdatei
- 101, 101', 101":: Kennung der ersten Sicherheitskonfigurationsdatei
- 102:: Konfigurationsdaten
- 102a', 102b':: Konfigurationsdaten
- 200; 200'; 200":: Zweite Sicherheitskonfigurationsdatei
- 201; 201'; 201":: Kennung der zweiten Sicherheitskonfigurationsdatei
- 202, 202":: Konfigurationsdaten
- 202a', 202c': Konfigurationsdaten
- 300:: Konverter
- 301:: Delta-Liste, vom Konverter erstellt
- 400:: Konsistenzprüfungseinheit
- 401: Delta-Liste, von der Konsistenzprüfungseinheit erstellt
- 500:: Manipulator
- 600:: Steuerungseinrichtung
- 700:: Datenverarbeitungsanlage
- 800:: Sicherheitssteuerungseinrichtung

## Patentansprüche

1. Verfahren (1) zur Konvertierung von zumindest einer in einer Sicherheitssteuerungseinrichtung verwendeten ersten Sicherheitskonfigurationsdatei (100) in eine zweite Sicherheitskonfigurationsdatei (200), wobei die erste Sicherheitskonfigurationsdatei (100) zumindest eine erste Kennung (101) und erste Konfigurationsdaten (102) aufweist und wobei die Sicherheitssteuerungseinrichtung vorzugsweise eine Manipulatorsicherheitssteuerungseinrichtung ist, und wobei das Verfahren die folgenden Schritte umfasst:
a) Konvertieren der ersten Sicherheitskonfigurationsdatei (100) in eine zweite Sicherheitskonfigurationsdatei (200) mittels eines Konverters (300), wobei hierbei keine manuelle Editierung erfolgt, und wobei
das Konvertieren der ersten Sicherheitskonfigurationsdatei (100) zumindest das Konvertieren der Konfigurationsdaten (102) in konvertierte Konfigurationsdaten umfasst, und wobei die Konfigurationsdaten (102) Sicherheitsparameter und/oder Sicherheitsfunktionsauswahlparameter umfassen, und wobei
die Kennung (101) der ersten Sicherheitskonfigurationsdatei (100) nicht konvertiert wird, sodass die zweite Sicherheitskonfigurationsdatei (200) die gleiche Kennung (201) wie die erste Sicherheitskonfigurationsdatei (100) aufweist;
b) Überprüfen der Konsistenz der ersten Sicherheitskonfigurationsdatei (100) und der zweiten Sicherheitskonfigurationsdatei (200) mittels einer Konsistenzprüfungseinheit (400), wobei
beim Überprüfen der Konsistenz der ersten (100) und zweiten Sicherheitskonfigurationsdateien (200) überprüft wird, ob die Sicherheitsparameter, welche in der ersten Sicherheitskonfigurationsdatei (100) implementiert sind, den Sicherheitsparametern, welche in der zweiten Sicherheitskonfigurationsdatei (200) implementiert sind, entsprechen;
und wobei die Kennung (201) der zweiten Sicherheitskonfigurationsdatei (200) geändert wird, wenn beim Überprüfen der Konsistenz eine Inkonsistenz festgestellt wird, wobei das Verfahren zumindest den weiteren Verfahrensschritt umfasst:
Automatisches Aktivieren der zweiten Sicherheitskonfigurationsdatei (200) falls die Kennung (201) der zweiten Sicherheitskonfigurationsdatei (200) mit der Kennung (101) der ersten Sicherheitskonfigurationsdatei (100), welche in der Sicherheitssteuerungseinrichtung (800) gespeichert ist übereinstimmt.

2. Verfahren zur Konvertierung nach Anspruch 1, wobei die Kennung (101) der ersten Sicherheitskonfigurationsdatei eine unabhängige Kennung ist.

3. Verfahren zur Konvertierung nach einem der vorhergehenden Ansprüche, wobei beim Überprüfen der Konsistenz der ersten (100) und zweiten Sicherheitskonfigurationsdateien (200) überprüft wird, ob die Sicherheitsfunktionsauswahlparameter, welche in der ersten Sicherheitskonfigurationsdatei (100) implementiert sind auch in der zweiten Sicherheitskonfigurationsdatei (200) implementiert sind.

4. Verfahren zur Konvertierung nach einem der vorhergehenden Ansprüche, wobei eine Fehlermeldung ausgegeben wird, wenn beim Überprüfen der Konsistenz eine Inkonsistenz festgestellt wird.

5. Verfahren zur Konvertierung nach einem der vorhergehenden Ansprüche, wobei das Verfahren weiterhin den folgenden Schritt umfasst:
c) Erstellen einer ersten Delta-Liste (301) mittels des Konverters (300), falls ein vollständiges Konvertieren der ersten Sicherheitskonfigurationsdatei (100') in eine zweite Sicherheitskonfigurationsdatei (200') nicht möglich ist, wobei die erste Delta-Liste (301) Abweichungen der ersten Sicherheitskonfigurationsdatei (100') von der zweiten Sicherheitskonfigurationsdatei (200') angibt.

6. Verfahren zur Konvertierung nach Anspruch 5, wobei einem Bediener die erste Delta-Liste (301) ausgegeben wird.

7. Verfahren zur Konvertierung nach Anspruch 5, wobei das Verfahren zumindest die weiteren Verfahrensschritte umfasst:
d) Erstellen einer zweiten Delta-Liste (401) mittels der Konsistenzprüfungseinheit (400), wobei die zweite Delta-Liste (401) Abweichungen der ersten Sicherheitskonfigurationsdatei (100') von der zweiten Sicherheitskonfigurationsdatei (200') angibt, und
e) Ausgeben der ersten und zweiten Delta-Listen (301; 401).

8. Verfahren zur Konvertierung nach einem der vorhergehenden Ansprüche wobei die Konvertierung und/oder die Überprüfung der Konsistenz "offline" geschehen kann.

9. Verfahren zur Konvertierung nach einem der vorhergehenden Ansprüche 1 bis 8, wobei das Verfahren weiterhin die folgenden Schritte umfasst:
f) Editieren einer ersten Sicherheitskonfigurationsdatei in eine zweite Sicherheitskonfigurationsdatei mittels eines Editors;
g) Erstellen einer dritten Delta-Liste mittels des Editors, wobei die dritte Delta-Liste Abweichungen der ersten Sicherheitskonfigurationsdatei von der zweiten Sicherheitskonfigurationsdatei angibt;
h) Überprüfen der Konsistenz der ersten Sicherheitskonfigurationsdatei und der zweiten Sicherheitskonfigurationsdatei mittels einer Konsistenzprüfungseinheit;
i) Ausgeben der zweiten und dritten Delta-Listen.

10. Datenverarbeitungsanlage, welche zur Durchführung des Verfahrens nach einem der vorhergehenden Ansprüche eingerichtet ist.

11. Maschinenlesbares Medium, welches Anweisungen enthält, die eine Datenverarbeitungsanlage dazu veranlassen, ein Verfahren gemäß den Ansprüchen 1 bis 9 auszuführen.

## Claims

1. A method (1) for converting at least one first safety configuration file (100) used in a safety control device into a second safety configuration file (200), wherein
the first safety configuration file (100) has at least a first identifier (101) and first configuration data (102) and wherein the safety control device is preferably a manipulator safety control device, and wherein the method comprises the following steps:
a) converting the first safety configuration file (100) into a second safety configuration file (200) by means of a converter (300), wherein no manual editing is performed, and wherein
converting the first safety configuration file (100) comprises at least converting the configuration data (102) into converted configuration data, and wherein the configuration data (102) comprises safety parameters and/or safety function selection parameters, and wherein
the identifier (101) of the first safety configuration file (100) is not converted so that the second safety configuration file (200) has the same identifier (201) as the first safety configuration file (100);
b) checking the consistency of the first safety configuration file (100) and the second safety configuration file (200) by means of a consistency checking unit (400), wherein
when checking the consistency of the first (100) and second safety configuration files (200), it is checked whether the safety parameters implemented in the first safety configuration file (100) correspond to the safety parameters implemented in the second safety configuration file (200); and wherein
the identifier (201) of the second safety configuration file (200) is changed if an inconsistency is detected during the consistency check, the method comprising at least the further method step:
automatically activating the second safety configuration file (200) if the identifier (201) of the second safety configuration file (200) matches the identifier (101) of the first safety configuration file (100) stored in the safety controller (800).

2. The method for converting according to claim 1, wherein the identifier (101) of the first safety configuration file is an independent identifier.

3. The method for converting according to any of the preceding claims, wherein when checking the consistency of the first (100) and second safety configuration files (200), it is checked whether the safety function selection parameters implemented in the first safety configuration file (100) are also implemented in the second safety configuration file (200).

4. The method for converting according to one of the preceding claims, wherein an error message is output, if an inconsistency is detected during the consistency check.

5. The method for converting according to one of the preceding claims, the method further comprising the following step:
c) creating a first delta list (301) by means of the converter (300) if a complete conversion of the first safety configuration file (100') into a second safety configuration file (200') is not possible, wherein the first delta list (301) indicates deviations of the first safety configuration file (100') from the second safety configuration file (200').

6. The method for converting according to claim 5, wherein the first delta list (301) is output to an operator.

7. The method for converting according to claim 5, wherein the method comprises at least the further method steps:
d) creating a second delta list (401) by means of the consistency check unit (400), wherein the second delta list (401) indicates deviations of the first safety configuration file (100') from the second safety configuration file (200'), and
e) outputting of the first and second delta lists (301; 401).

8. The method for converting according to one of the preceding claims, wherein the conversion and/or the consistency check can be carried out "offline".

9. The method for converting according to one of the preceding claims 1 to 8, wherein the method further comprises the following steps:
f) editing a first safety configuration file into a second safety configuration file by means of an editor;
g) creating a third delta list using the editor, the third delta list indicating deviations of the first safety configuration file from the second safety configuration file;
h) checking the consistency of the first safety configuration file and the second safety configuration file by means of a consistency checking unit;
i) outputting the second and third delta lists.

10. A data processing device which is configured to carry out the method according to one of the preceding claims.

11. A machine-readable medium containing instructions which cause a data processing device to perform a method according to claims 1 to 9.

## Revendications

1. Procédé (1) de conversion d'au moins un premier fichier de configuration de sécurité (100), utilisé dans un équipement de commande de sécurité, en un second fichier de configuration de sécurité (200), le premier fichier de configuration de sécurité (100) comportant au moins une première clé (101) et des premières données de configuration (102), et l'équipement de commande de sécurité étant de préférence un équipement de commande de sécurité de manipulateur, et le procédé incluant les étapes suivantes :
a) conversion du premier fichier de configuration de sécurité (100) en un second fichier de configuration de sécurité (200) au moyen d'un convertisseur (300), aucune correction manuelle n'ayant alors lieu, et
la conversion du premier fichier de configuration de sécurité (100) incluant au moins la conversion des données de configuration (102) en données de configuration converties, et les données de configuration (102) incluant des paramètres de sécurité et/ou des paramètres de sélection de fonction de sécurité, et
la clé (101) du premier fichier de configuration de sécurité (100) n'étant pas convertie, de façon que le second fichier de configuration de sécurité (200) comporte la même clé (201 que le premier fichier de configuration de sécurité (100) ;
b) contrôle de la cohérence du premier fichier de configuration de sécurité (100) et du second fichier de configuration de sécurité (200) au moyen d'une unité de contrôle de cohérence (400),
lors du contrôle de la cohérence des premier (100) et second fichiers de configuration de sécurité (200), étant contrôlé si les paramètres de sécurité qui sont mis en œuvre dans le premier fichier de configuration de sécurité (100) correspondent aux paramètres de sécurité qui sont mis en œuvre dans le second fichier de configuration de sécurité (200) ;
et la clé (201) du second fichier de configuration de sécurité (200) étant modifiée si, lors du contrôle de la cohérence, est constatée une incohérence, le procédé incluant au moins l'étape de procédé supplémentaire :
activation automatique du second fichier de configuration de sécurité (200) si la clé (201) du second fichier de configuration de sécurité (200) concorde avec la clé (101) du premier fichier de configuration de sécurité (100) qui est stocké dans l'équipement de commande de sécurité (800).

2. Procédé de conversion selon la revendication 1, la clé (101) du premier fichier de configuration de sécurité étant une clé indépendante.

3. Procédé de conversion selon une des revendications précédentes, lors du contrôle de la cohérence des premier (100) et second fichiers de configuration de sécurité (200), étant contrôlé si les paramètres de sélection de fonction de sécurité qui sont mis en œuvre dans le premier fichier de configuration de sécurité (100) sont aussi mis en œuvre dans le second fichier de configuration de sécurité (200).

4. Procédé de conversion selon une des revendications précédentes, un message d'erreur étant émis si, lors d'un contrôle de la cohérence, une incohérence est constatée.

5. Procédé de conversion selon une des revendications précédentes, le procédé incluant également l'étape suivante :
c) établissement d'une première liste delta (301) au moyen du convertisseur (300) si une conversion complète du premier fichier de configuration de sécurité (100') en un second fichier de configuration de sécurité (200') n'est pas possible, la première liste delta (301) indiquant des écarts du premier fichier de configuration de sécurité (100') par rapport au second fichier de configuration de sécurité (200').

6. Procédé de conversion selon la revendication 5, la première liste delta (301) étant remise à un opérateur.

7. Procédé de conversion selon la revendication 5, le procédé incluant au moins les étapes de procédé supplémentaires :
d) établissement d'une deuxième liste delta (401) au moyen de l'unité de contrôle de cohérence (400), la deuxième liste delta (401) indiquant des écarts du premier fichier de configuration de sécurité (100') par rapport au second fichier de configuration de sécurité (200'), et
e) remise des première et deuxième listes delta (301 ; 401).

8. Procédé de conversion selon une des revendications précédentes, la conversion et/ou le contrôle de la cohérence pouvant avoir lieu « hors ligne ».

9. Procédé de conversion selon une des revendications précédentes 1 à 8, le procédé incluant également les étapes suivantes :
f) correction d'un premier fichier de configuration de sécurité en un second fichier de configuration de sécurité au moyen d'un programme de correction ;
g) établissement d'une troisième liste delta au moyen du programme de correction, la troisième liste delta indiquant des écarts du premier fichier de configuration de sécurité par rapport au second fichier de configuration de sécurité ;
h) contrôle de la cohérence du premier fichier de configuration de sécurité et du second fichier de configuration de sécurité au moyen d'une unité de contrôle de cohérence ;
i) remise des seconde et troisième listes delta.

10. Installation de traitement de données, laquelle est agencée pour réaliser le procédé selon une des revendications précédentes.

11. Support lisible par machine, lequel contient des instructions qui permettent à une installation de traitement de données à réaliser un procédé selon les revendications 1 à 9.
